## Europäisches Patentamt
## European Patent Office
## Office européen des brevets

(11) Veröffentlichungsnummer: **0 274 020 B1**

(12) **EUROPÄISCHE PATENTSCHRIFT**

(45) Veröffentlichungstag der Patentschrift: **27.02.91**

(51) Int. Cl.5: **C01F 11/18, C05D 3/02**

(21) Anmeldenummer: **87116128.7**

(22) Anmeldetag: **03.11.87**

(54) Verfahren und Vorrichtung zur Herstellung von suspendierten Erdalkalicarbonaten.

(30) Priorität: **03.12.86 DE 3641305**

(43) Veröffentlichungstag der Anmeldung:
**13.07.88 Patentblatt 88/28**

(45) Bekanntmachung des Hinweises auf die
Patenterteilung:
**27.02.91 Patentblatt 91/09**

(84) Benannte Vertragsstaaten:
**AT BE DE ES FR GB IT NL SE**

(56) Entgegenhaltungen:
**DE-A- 2 002 363**
**DE-B- 1 011 861**
**DE-B- 1 016 723**
**DE-B- 1 024 099**
**FR-A- 1 110 233**

(73) Patentinhaber: **Chemische Fabrik Kalk GmbH**
**Kalker Hauptstrasse 22 Postfach 91 01 57**
**D-5000 Köln 91(DE)**

(72) Erfinder: **Eisenhauer, Gerhard, Dr.**
**Roonstrasse 81**
**D-4150 Krefeld(DE)**
Erfinder: **Michalski, Engelhard**
**Am Krumfingers Hof 21**
**D-5000 Köln 91(DE)**

Erfinder: **Thielemann, Heinz, Dr.**
**Unterste Sauwiese 13**
**D-5000 Köln 80(DE)**
Erfinder: **Wickenhäuser, Gerhard, Dr.**
**Sander Strasse 89b**
**D-5060 Bergisch Gladbach(DE)**
Erfinder: **Kerscher, Utto, Dr.**
**Am Beissel 25**
**D-5042 Erftstadt 12(DE)**
Erfinder: **Tesche, Kurt, Dr.**
**Am Ufer 2**
**D-5060 Bergisch Gladbach(DE)**
Erfinder: **Breuer, Ludwig**
**Annette Kolb-Strasse 5**
**D-5000 Köln 91(DE)**

(74) Vertreter: **Werner, Hans-Karsten et al**
**Patentanwälte von Kreisler Selting Werner**
**Deichmannhaus am Hauptbahnhof**
**D-5000 Köln 1(DE)**

## Beschreibung

Gegenstand der vorliegenden Erfindung ist ein Verfahren und eine Vorrichtung zur Herstellung von suspendierten Erdalkalicarbonaten durch Umsetzung von wasserlöslichen Erdalkalisalzen mit Ammoniak und Kohlensäure in einer Blasensäule. Insbesondere dienen dieses Verfahren und diese Vorrichtung zur Umwandlung von Calciumnitrat-tetrahydrat mit Ammoniak und Kohlensäure in wässrigen Lösungen zu Calciumcarbonat und Ammoniumnitratlösungen. Das Verfahren und die Vorrichtung sind jedoch ebenfalls gut geeignet, andere wasserlösliche Erdalkalisalze, insbesondere Calciumchlorid sowie die Chloride und Nitrate von Magnesium, Strontium und Barium sowie Gemische derselben umzusetzen.

Calciumnitrat-tetrahydrat entsteht u. a. im sogenannten Odda-Verfahren beim Aufschluß von Phosphaterzen mit Salpetersäure und dem Abkühlen der so entstandenen Aufschlußlösung. Es ist bekannt, das Calciumnitrat-tetrahydrat mit Ammoniak und Kohlensäure in wässrigen Lösungen zu Calciumcarbonat und Ammoniumnitratlösungen umzusetzen. Da die Reaktion stark exotherm ist, wird sie vielfach in zwei Stufen durchgeführt. In der ersten Stufe wird unter gleichzeitigem intensivem Kühlen Kohlensäure und Ammoniak in wässriger Lösung zu Ammoniumcarbonat umgesetzt. Freiwerdende Wärme wird mit Hilfe wasserge-kühlter Rohre abgeführt. Die gekühlte Ammoniumcarbonatlösung wird in Rührgefäßen mit der Calciumnitratlösung gemischt, wobei Calciumcarbonat ausfällt.

Es ist ein weiteres Verfahren bekannt (Hoechst AG / Uhde), bei dem die Umsetzung von Calciumnitrat mit flüssigem Ammoniak und Kohlensäure in einer Blasensäule erfolgt. Dabei wird die Reaktionswärme teilweise verbraucht durch die Verdampfung des flüssigen Ammoniaks. Die überwiegende Reaktionswärme wird ebenfalls durch Kühlung mit Hilfe von Kühlrohren abgeführt.

Ein großer Nachteil des zweistufigen Verfahrens besteht darin, daß Gase mit geringem Kohlensäureanteil (unter 50%) mit erheblichem Überschuß eingesetzt werden müssen, um eine vollständige Umsetzung des Ammoniaks zu erreichen. Dies liegt an dem Reaktionsgleichgewicht Ammoniak/Kohlensäure, welches unter üblichen Reaktionsbedingungen in erheblichem Maße auf der Seite der Gase liegt.

Auch bei der direkten Umsetzung von Calciumnitrat in einer Blasensäule wird bei Kohlensäurekonzentrationen unter 50 % bei vollständigem Ammoniakumsatz nur ein ungenügender Umsatz der Kohlensäure erreicht. Die Ursache dafür liegt vor allem darin, daß die Reaktion in der flüssigen Phase abläuft und die Reaktionsgeschwindigkeit bei kleinen Partialdrucken für Kohlensäure aufgrund der geringen Löslichkeit der Kohlensäure im Wasser sehr klein ist.

Die Blasensäule beim einstufigen Verfahren ist bisher so ausgestaltet, daß im unteren Teil eine Einleitung für Kohlensäuregas vorhanden ist und darüber in mehreren Ebenen Ammoniak eingeführt wird. Zwischen den Einführungsstellen für flüssiges Ammoniak befinden sich Kühlschlangen, die mit Kühlwasser gekühlt werden.

Die Erfindung hat sich zunächst die Aufgabe gestellt, das Verfahren zur Umwandlung von Calciumnitrat-tetrahydrat mit Ammoniak und Kohlensäure in wässrigen Lösungen zu Calciumcarbonat und Ammoniumnitratlösungen in einer Blasensäule dahingehend zu verbessern, daß die Reaktion möglichst rasch und vollständig erfolgt, dabei jedoch die Reaktionswärme gut beherrschbar bleibt. Der Bedarf an Kühlmittel soll so gering wei möglich gehalten werden und das abströmende Gas so wenig wie möglich nicht umgesetztes Ammoniak und nicht umgesetzte Kohlensäure enthalten. Dabei soll das anfallende Calciumcarbonat von seiner Kristallart und Korngrößenverteilung möglichst gleichförmig sein. Schließlich soll das Verfahren möglichst auch mit einer in hohem Maße durch Inertgas verdünnten Kohlensäure durchführbar sein, so daß im Extremfall auch Rauchgase aus Kraftwerken eingesetzt werden können. Bisher können derartige Abgase nur dann im zweistufigen Verfahren eingesetzt werden, wenn sie mit reiner Kohlensäure auf einen Gehalt von mindestens 50 % Kohlensäure gebracht worden sind.

Die Erfindung hat sich weiterhin die Aufgabe gestellt, generell suspendierte Erdalkalicarbonate durch Umsetzung von wasserlöslichen Erdalkalisalzen mit Ammoniak und Kohlensäure in einer Blasensäule zu verbessern und dabei die Verfahrensmaßnahmen und Vorrichtung des Verfahrens zur Umwandlung von Calciumnitrat-tetrahydrat mit Ammoniak und Kohlensäure in wässrigen Lösungen zur Anwendung zu bringen.

Diese Aufgaben können in überraschend einfacher Weise dadurch gelöst werden, daß das Ammoniak gasförmig mit der durch Inertgas verdünnten Kohlensäure umgesetzt und dann unmittelbar in die wässrige Calciumnitratlösung eingeleitet wird. Es ist weiterhin möglich, anstatt gasförmigem Ammoniak wässrige Ammoniaklösung einzusetzen. Diese Lösung sollte 1 bis 30 Gew.-% Ammoniak, vorzugsweise 10 bis 18 Gew.-% Ammoniak, enthalten.

Die Umsetzung des Ammoniakgases mit gasförmiger Kohlensäure zu festem Ammoniumcarbonat erfolgt außerordentlich rasch. Das feste Ammoniumcarbonat oder seine Zerfallsprodukte wiederum lösen sich rasch in der Lösung von Calciumnitrat oder anderen Erdalkalisalzen. Obwohl somit außer der Gasphase und der flüssigen Phase erfindungsgemäß auch noch eine feste Phase entstehen kann, erfolgt die Umsetzung und Lösung rascher, und es kommt zu keinerlei Verkrustungen oder Ablagerungen durch die zusätzliche feste Phase. Erstaunlicherweise fällt beispielsweise auch das Calciumcarbonat unter den erfindungsgemäßen Bedingungen reproduzierbar als grobkörniger Calcit an, der leicht abgetrennt und weiterverwendet werden kann. Die starke Wärmetönung der Reaktion is völlig beherrschbar durch den Einsatz von wasserdurchströmten Kühlrohren sowie durch den Einsatz von vorgekühlter Erdalkalisalzlösung.

Die Umsetzung von Ammoniakgas mit gasförmiger Kohlensäure bzw. der wässrigen Ammoniaklösung erfolgt in optimaler Weise, wenn das gasförmige Ammoniak oder die wässrige Ammoniaklösung unmittelbar vor dem Eintritt in die Blasensäule zentral in einen Gasstrom der durch Inertgas verdünnten Kohlensäure eingeleitet wird. Da Kohlensäure stets in einem gewissen stöchiometrischen Überschuß eingesetzt wird, hat es sich weiterhin bewährt, die Strömungsgeschwindigkeit der durch Inertgas verdünnten Kohlensäure an der Stelle der Vermischung mit dem Ammoniakgas bzw. der Ammoniaklösung höher einzustellen als die Strömungsgeschwindigkeit des Ammoniakgases bzw. der Ammoniaklösung. Apparativ läßt sich dies in besonders einfacher Weise erreichen, indem die Zuleitung für Ammoniak bzw. wässrige Ammoniaklösung zentral in der Zuleitung für mit Inertgas verdünnter Kohlensäure angebracht ist und die Einleitungsstelle als Ringdüse ausgebildet ist. Vorzugsweise ist diese Ringdüse als Venturi-Düse ausgebildet, so daß die beiden Gase bzw. das Gas mit der Ammoniaklösung im Augenblick des Zusammentreffens intensiv verwirbelt und vermischt werden. Weiterhin hat sich bewährt, die Kohlensäure und das Ammoniak senkrecht von oben nach unten in die Lösung einzuleiten, da hierdurch eine intensivere Vermischung der Gasphase mit der Flüssigkeit ermöglicht wird, sich der Weg des Gases in der Flüssigkeit verlängert und Feststoffeinlagerungen in den Gaseinleitrohren vermieden werden. Die intensive Vermischung der Phasen wird weiterhin dadurch verstärkt, daß die aufsteigenden Blasen gegen die Kühlrohre stoßen und dadurch am zu raschen und ungestörten Aufsteigen durch die Flüssigkeitsphase gehindert werden.

Apparativ läßt sich dies besonders gut erreichen durch einen quadratisch ausgebildeten Reaktionsraum, in dem die Kühlrohre kreuzweise angeordnet sind. Ein weiterer Vorteil dieser Konstruktionsart ist die erhöhte mechanische Stabilität des Reaktionsraumes durch die Kühlrohre, so daß das erfindungsgemäße Verfahren problemlos auch unter Überdruck betrieben werden kann.

Die Durchführung des erfindungsgemäßen Verfahrens unter Überdruck weist den erheblichen Vorteil auf, daß auch Kohlensäure mit einem erheblich höheren Anteil an Inertgas als 50 % eingesetzt werden kann. Durch den Überdruck wird der Partialdruck an Kohlensäure erhöht und die Blasengröße der Gasblasen verringert. Obwohl kleinere Gasvolumina zu einer kleineren Austauschfläche zwischen Gasgemisch und Flüssigkeit führen, kommt es erfindungsgemäß dennoch zu einer raschen und vollständigen Umsetzung der Reaktionspartner.

Von erheblicher Bedeutung für die Durchführbarkeit des erfindungsgemäßen Verfahrens ist die Kühlung der eingesetzten Erdalkalisalzlösung vor Eintritt in die Blasensäule. Es hat sich insbesondere zweckmäßig erwiesen, diese Kühlung vorzunehmen durch Verdampfen von flüssigem Ammoniak. Diese Maßnahme führt zu folgenden Effekten: Die Wärmetönung der Gesamtreaktion bleibt gut beherrschbar, die Verdampfungswärme des flüssigen Ammoniaks und das gasförmige Ammoniak werden an den optimalen Stellen eingesetzt, die gekühlte Erdalkalisalzlösung kann zum Waschen und Abkühlen des abströmenden Gases verwendet werden, so daß in der Gasphase verbliebenes Ammoniakgas und Kohlensäuregas in erheblichem Maße in den Reaktionsraum zurückgeführt werden. Das abströmende Gas enthält dann neben Inertgas nur noch die überschüssigen Mengen an Kohlensäure und relativ geringere Mengen an Ammoniak. Die saure Nachreinigung des abströmenden Gases kann somit mit relativ geringem Aufwand erfolgen, zumal aus Gründen des Umweltschutzes nur ausreichend von Ammoniak befreites Inertgas in die Atmosphäre abgeleitet werden darf. Die Kühlung der eingesetzten Erdalkalisalzlösung kann jedoch auch mit anderen Kühlmitteln erfolgen.

Bei einer vorzugsweisen Ausgestaltung des erfindungsgemäßen Verfahrens wird ein Teil der im Sumpf des Reaktionsgefässes entnommenen Suspension aus Erdalkalicarbonat und Ammoniumsalz im Kreislauf gefahren. Hierdurch ist es möglich, das Wachstum der Erdalkalicarbonatkristalle steuernd zu beeinflussen. Gewünschtenfalls kann in diesen Kreislauf noch eine Klassiervorrichtung eingebaut werden, durch welche die gröberen Kristalle abgetrennt und die feineren in das Reaktionsgefäß zurückgeführt werden. Es ist somit erfindungsgemäß möglich, die Bedingungen des Kirstallwachstums und die Korngrößenverteilung des entstehenden Erdalkalicarbonats unabhängig von der vorgeschalteten Umsetzungsreaktion zwischen Erdalkalisalz, Ammoniak und Kohlensäure zu steuern.

Gegenstand der vorliegenden Erfindung ist somit zunächst das Verfahren zur Herstellung von suspendierten Erdalkalicarbonaten durch Umsetzung von wasserlöslichen Erdalkalisalzen mit Ammoniak und Kohlensäure in einer Blasensäule, dadurch gekennzeichnet, daß entweder gasförmiges Ammoniak oder wässrige Ammoniaklösung zunächst mit der durch ein Inertgas verdünnten Kohlensäure gemischt und dann die erhaltene Mischung unmittelbar in die Lösung der wasserlöslichen Erdalkalisalze in der Blasensäule eingeleitet werden.

Weiterhin betrifft die Erfindung die Vorrichtung zur Durchführung dieses Verfahrens, bestehend aus einem Reaktionsgefäß 1 mit einer oberen Zuleitung für die Erdalkalisalzlösung 2, einer oberen Ableitung für das abströmende Gas 3, einem durch Kühlrohre 8 kühlbaren Reaktionsraum 4, Zuleitungen 5 und 6 im unteren Teil des Reaktionsraumes für das gasförmige Ammoniak bzw. -lösung mit der durch Inertgas verdünnten Kohlensäure, wobei die Zuleitungen 5 für das gasförmige Ammoniak bzw. die wässrige Ammoniaklösung zentral in den Zuleitungen 6 für die mit einem Inertgas verdünnten Kohlensäure angeordnet sind, sowie einer unteren Ableitung 7 für die Suspension des Erdalkalicarbonats.

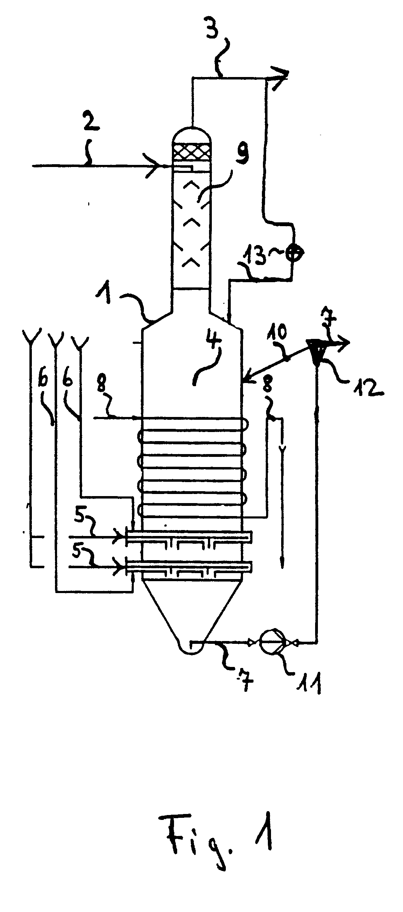

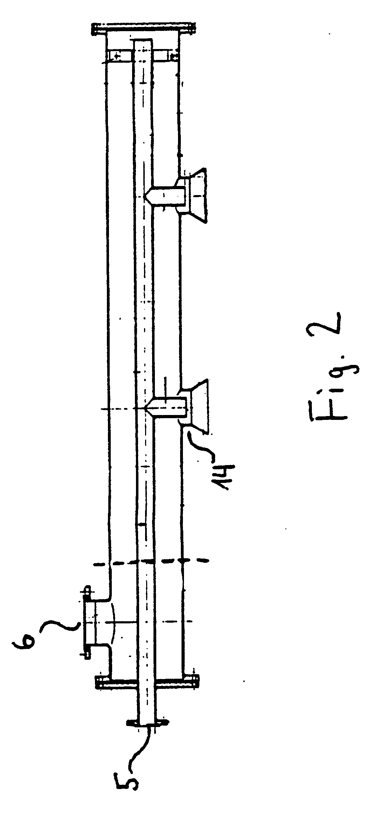

In der anliegenden Figur 1 ist eine derartige Vorrichtung abgebildet. Figur 2 stellt eine vorzugsweise Ausgestaltung der Zuleitungen für Ammoniakgas bzw. wässrige Ammoniaklösung und mit Inertgas verdünnte Kohlensäure dar.

In diesen Figuren bedeuten:

1 das Reaktionsgefäß

2 die obere Zuleitung für Erdalkalisalzlösung

3 die obere Ableitung für abströmendes Gas

4 den Reaktionsraum

5 Zuleitungen für Ammoniak bzw. wässrige Ammoniaklösung

6 Zuleitungen für mit Inertgas verdünnte Kohlensäure

7 die untere Ableitung für wässrige Suspension von Erdalkalicarbonat in Ammoniumsalzlösung

8 mit Wasser kühlbare Kühlrohre

9 den Gaswäscher im oberen Teil des Reaktionsgefäßes

10 die Rückführungsleitung über die Suspension

11 die Pumpe für die Suspension

12 eine Klassiervorrichtung (beispielsweise Hydrozyklon)

13 die Drucksteuerung

14 die als Ringdüse ausgebildete Zuleitung für die zentrale Zuleitung von Ammoniakgas bzw. wässrige Ammoniaklösung in die Zuleitung für mit Inertgas verdünnte Kohlensäure.

Das erfindungsgemäße Verfahren sowie die Vorrichtung zur Durchführung desselben sind in den nachfolgenden Beispielen näher erläutert:

Beispiel 1

Calciumnitratlösung aus einem Odda-Verfahren mit normaler oder erhöhter Temperatur bis ca.

90° C wird zunächst über einen Wasserkühler und dann durch den Wärmeaustauscher eines Ammoniakverdampfers bis nahe an 0° C abgekühlt. Diese gekühlte Lösung wird in den als Gaswäscher ausgestalteten oberen Teil des Reaktionsgefäßes eingespritzt. Das im Gegenstrom aus dem Kolonnenkopf austretende Gas wird dabei von 40 - 80° C auf ca. 10 - 20° C abgekühlt und von dort in einen sauren Gaswäscher mit verdünnter Phosphorsäure geleitet. Die Lösung von Calciumnitrat erwärmt sich dabei leicht und vermischt sich dann im oberen Teil des Reaktionsraumes mit dem 40 - 80° C-warmen Reaktionsgemisch. Es wirkt somit kühlend auf den Kolonneninhalt, der in einem Bereich von 40 - 80° C konstant gehalten wird.

Die mit Inertgas verdünnte Kohlensäure wird über Einleitungsrohre zugeführt, die nach unten offene Austrittsöffnungen tragen. Diese Öffnungen sind möglichst gleichmäßig über den Kolonnenquerschnitt verteilt. Das Ammoniakgas wird über zentrale Einleitungsrohre mit Mündungsrohren zugeführt, die zentrisch im Austrittsquerschnitt der Einleitungsöffnungen für Kohlensäure angebracht sind. Diese Anordnung bewirkt eine intensive Vermischung der Gase und gestattet eine gewisse Reaktion der Gase in der Gasphase zu dem festen Zwischenprodukt Ammoniumcarbonat. Durch die Einleitung der Gase nach unten entstehen kleinere Blasen mit einem längeren Weg durch die Flüssigkeit. Etwaige wasserlösliche feste Ablagerungen von Ammoniumcarbonat werden bei dieser Anordnung vermieden oder können im Notfall leicht entfernt werden.

Die entstehende Suspension aus Calciumcarbonat und Ammoniumnitrat wird am Sumpf des Reaktionsgefässes entnommen und abgepumpt. Vorzugsweise wird ein Teil dieser Suspension im Kreislauf in den oberen Teil des Reaktionsgefässes zurückgeleitet, während der Rest in festes Calciumcarbonat und ammoniumnitrathaltiges Filtrat aufgetrennt wird. Bereits durch das Umpumpen des Teils der Lösung erfolgt eine gewisse Klassierung der Calciumcarbonatkristalle, und es können das Kristallwachstum und die Korngrößenverteilung der Calciumcarbonatkristalle beeinflußt werden. Die Klassierung kann gewünschtenfalls verstärkt werden durch eine Klassierungsvorrichtung, wie beispielsweise ein Hydrozyklon.

Der pH-Wert von 6 - 9, vorzugsweise 7,8, ergibt einen hohen CaO-Umsatz von über 99,95 %.

Sobald mit Kohlensäure gearbeitet werden soll, die mehr als 50 % Inertgas enthält, hat es sich bewährt, das Verfahren unter Überdruck zu betreiben. Der Überdruck kann ohne weiteres bis zu 5 bar betragen, wobei es dann möglich ist, Kohlensäure einzusetzen, die bis zu 90% Inertgas enthält. Da Rauchgase bereits ca. 15 % Kohlensäure enthalten, können diese somit ohne weiteres erfindungsgemäß verwendet werden. 40%ige Kohlensäure wird mit exzellenten Ergebnissen bei 0,5 bar Überdruck verwendet.

Beispiel 2

Strontiumchlorid-Lösung mit einem $SrCl_2$-Gehalt von 9 % und einer Temperatur bis ca. 90°C wird zunächst über einen Wasserkühler und dann durch den Wärmeaustauscher eines Ammoniakverdampfers bis nahe 0°C abgekühlt. Diese gekühlte Lösung wird in den als Gaswäscher ausgestalteten oberen Teil des Reaktionsgefäßes eingespritzt. Das im Gegenstrom aus dem Kolonnenkopf austretende Gas wird dabei von 40-80°C auf ca. 10-20°C abgekühlt und von dort in einen sauren Gaswäscher mit verdünnter Phosphorsäure geleitet. Die Strontiumchlorid-Lösung erwärmt sich dabei leicht und vermischt sich dann im oberen Teil des Reaktionsraums mit dem 40-80°C warmen Reaktionsgemisch. Es wirkt somit kühlend auf den Kolonneninhalt, der in einem Bereich von 40-80°C konstant gehalten wird. Die mit Inertgas verdünnte Kohlensäure wird über Einleitungsrohre zugeführt, die nach unten offene Austrittsöffnungen tragen. Diese Öffnungen sind möglichst gleichmäßig über den Kolonnenquerschnitt verteilt. Das Ammoniakgas wird über zentrale Einleitungsrohre mit Mündungsrohren zugeführt, die zentrisch im Austrittsquerschnitt der Einleitungsöffnungen für Kohlensäure angebracht sind.

Die entstehende Suspension aus Strontiumcarbonat und Ammoniumchlorid-Lösung wird am Sumpf des Reaktionsgefäßes entnommen und abgepumpt. Vorzugsweise wird ein Teil dieser Suspension im Kreislauf in den oberen Teil des Reaktionsgefäßes zurückgeleitet, während der Rest in festes Strontiumcarbonat und ammoniumchloridhaltiges Filtrat aufgetrennt wird. Bereits durch das Umpumpen des Teils der Lösung erfolgt eine gewisse Klassierung der Strontiumcarbonatkristalle, und es können das Kristallwachstum und die Korngrößenverteilung der Strontiumcarbonatkristalle beeinflußt werden. Die Klassierung kann gewünschtenfalls verstärkt werden durch eine Klassiervorrichtung, wie beispielsweise ein Hydrozyklon.

Der pH-Wert von 6-9, vorzugsweise 7,8, ergibt einen hohen $SrCO_3$-Ausbeute von 99 %.

Beispiel 3

Calciumchlorid-Lösung mit einem $CaCl_2$-Gehalt von etwa 13%, wie sie u.a. auch bei dem Soda-Herstellungsverfahren erhalten wird, wird analog dem Beispiel 2 eingesetzt. Die mit Inertgas verdünnte Kohlensäure wird, wie in Beispiel 2 beschrieben, zugeführt. Eine wässrige Ammoniaklösung mit einem $NH_3$-Gehalt von 15 % wird über zentrale Einleitungsrohre so zugeführt, daß eine Vermischung mit der Kohlensäure vor Eintritt in das Reaktionsgefäß erfolgt. Die entstehende Suspension aus Calciumcarbonat und Ammoniumchlorid-Lösung wird am Sumpf des Reaktionsgefäßes entnommen und abgepumpt. Vorzugsweise wird ein Teil dieser Suspension im Kreislauf in den oberen Teil des Reaktionsgefäßes zurückgeleitet, während der Rest in festes Calciumcarbonat und ammoniumchloridhaltiges Filtrat aufgetrennt wird.

Es wird ein Calciumcarbonat mit einem Schüttgewicht von 0,8 kg/l und einer Korngröße von 1-50 μm in einer Ausbeute von 99,5 % erhalten.

Beispiel 4

Magnesiumchlorid-Lösung mit einem $MgCl_2$-Gehalt von 18% wird analog dem Beispiel 2 eingesetzt und mit der mit Inertgas verdünnten Kohlensäure und Ammoniakgas gemäß der in Beispiel 2 beschriebenen Reaktion bei einer Temperatur von 70°C umgesetzt. Die entstandene Suspension aus festem Magnesium-carbonat-hydroxid (Hydromagnesit, $Mg(CO_3)_3(OH)_2 \cdot 3 H_2O$) und ammoniumchloridhaltiger Lösung wird in Feststoff und Ammoniumchlorid-Lösung aufgetrennt.

Es wird ein Hydromagnesit mit einem Schüttgewicht von 0,19 kg/l und einer Korngröße von 1-50 μm in einer Ausbeute von 99,7 % erhalten.

Beispiel 5

Ein Gemisch von 100 Gew.-Teilen Magnesiumchlorid-Lösung, mit einem $MgCl_2$-Gehalt von 18 %, und 161,5 Gew.-Teile Calciumchlorid-Lösung, mit einem $CaCl_2$-Gehalt von 13 %, werden analog dem Beispiel 2 eingesetzt und mit der mit Inertgas verdünnten Kohlensäure und Ammoniakgas gemäß der in Beispiel 2 beschriebenen Reaktion bei einer Temperatur von 80°C umgesetzt. Die entstehende Suspension aus festem Calcium-Magnesiumcarbonat ($CaMg(CO_3)_2$) und ammoniumchloridhaltiger Lösung wird in Feststoff und Ammoniumchlorid-Lösung aufgetrennt.

Es wird ein Calcium-Magnesiumcarbonat von einer Korngröße von 1-50 μm in einer Ausbeute von 99,5 % erhalten.

Ansprüche

1. Verfahren zur Herstellung von suspendierten Erdalkalicarbonaten durch Umsetzung von wasserlöslichen Erdalkalisalzen mit Ammoniak und Kohlensäure in einer Blasensäule, dadurch gekennzeichnet, daß entweder gasförmiges Ammoniak oder wässrige Ammoniaklösung zunächst mit der durch ein Inertgas verdünnten Kohlensäure gemischt und dann die erhaltene Mischung unmittelbar in die Lösung der wasserlöslichen Erdalkalisalze in der Blasensäule eingeleitet werden.

2. Verfahren gemäß Anspruch 1, dadurch gekennzeichnet, daß als wasserlösliches Erdalkalisalz Calciumnitrat eingesetzt wird.

3. Verfahren gemäß Anspruch 1, dadurch gekennzeichnet, daß als wasserlösliches Erdalkalisalz Calciumchlorid sowie die Chloride und Nitrate von Magnesium, Strontium und Barium sowie Gemische derselben eingesetzt werden.

4. Verfahren gemäß einem der Ansprüche 1 bis 3, dadurch gekennzeichnet, daß man das gasförmige Ammoniak bzw. die wässrige Ammoniaklösung unmittelbar vor Eintritt in die Blasensäule zentral in einen Gasstrom der durch Inertgas verdünnten Kohlensäure eingeleitet wird.

5. Verfahren gemäß einem der Ansprüche 1 bis 4, dadurch gekennzeichnet, daß die Strömungsgeschwindigkeit der durch Inertgas verdünnten Kohlensäure an der Stelle der Vermischung mit dem gasförmigen Ammoniak bzw. der wässrigen Ammoniaklösung höher ist als die Strömungsgeschwindigkeit des gasförmigen Ammoniaks bzw. der wässrigen Ammoniaklösung.

6. Verfahren gemäß einem der Ansprüche 1 bis 5, dadurch gekennzeichnet, daß die Mischung aus dem gasförmigen Ammoniak und der mit Inertgas verdünnten Kohlensäure senkrecht von oben nach unten in die wässrige Erdalkalisalzlösung eingeleitet wird.

7. Verfahren gemäß einem der Ansprüche 1 bis 6, dadurch gekennzeichnet, daß die Lösung der Erdalkalisalze vor Eintritt in die Blasensäule gekühlt wird.

8. Verfahren gemäß einem der Ansprüche 1 bis 7, dadurch gekennzeichnet, daß die Kühlung durch Verdampfen des Ammoniaks erfolgt.

9. Verfahren gemäß einem der Ansprüche 1 bis 8, dadurch gekennzeichnet, daß man die Blasenkolonne unter Überdruck betreibt.

10. Verfahren gemäß einem der Ansprüche 1 bis 9, dadurch gekennzeichnet, daß das Gemisch aus suspendiertem Erdalkalicarbonat und wasserlöslichen Erdalkalisalzen teilweise im Kreislauf gefahren wird.

11. Verfahren gemäß einem der Ansprüche 1 bis 10, dadurch gekennzeichnet, daß die gekühlte Lösung von Erdalkalisalzen am Kopf der Blasensäule als Waschflüssigkeit für das abströmende Gas eingesetzt wird.

12. Vorrichtung zur Durchführung des Verfahrens gemäß einem der Ansprüche 1 bis 11, bestehend aus einem Reaktionsgefäß (1) mit einer oberen Zuleitung für die Erdalkalisalzlösung (2), einer oberen Ableitung für das abströmende Gas (3), einem durch Kühlrohre (8) kühlbaren Reaktionsraum (4), Zuleitungen (5) und (6) im unteren Teil des Reaktionsraumes für das gasförmige Ammoniak bzw. -lösung mit der durch Inertgas verdünnten Kohlensäure, wobei die Zuleitungen (5) für das gasförmige Ammoniak bzw. die wässrige Ammoniaklösung zentral in den Zuleitungen (6) für die mit einem Inertgas verdünnten Kohlensäure angeordnet sind, sowie einer unteren Ableitung (7) für die Suspension des Erdalkalicarbonats. ·

13. Vorrichtung gemäß Anspruch 12, dadurch gekennzeichnet, daß der Reaktionsraum (4) quadratisch ausgebildet ist und die Kühlrohre (8) kreuzweise angeordnet sind.

14. Vorrichtung gemäß Ansprüchen 12 oder 13, dadurch gekennzeichnet, daß der obere Teil des Reaktionsgefäßes (1) als Gaswäscher (9) für das abströmende Gas ausgebildet ist.

15. Vorrichtung gemäß einem der Ansprüche 12 bis 14, dadurch gekennzeichnet, daß eine Rückführungsleitung (10) und eine Pumpe (11) für die Suspension von Sumpf zum oberen Teil des Reaktionsgefäßes (1) vorhanden ist.

16. Vorrichtung gemäß Anspruch 15, dadurch gekennzeichnet, daß in der Rückführungsleitung (10) eine Klassiervorrichtung (12) für das Erdalkalicarbonat vorhanden ist.

17. Vorrichtung gemäß einem der Ansprüche 12 bis 16, dadurch gekennzeichnet, daß in der Ableitung für das abströmende Gas (3) eine Drucksteuerung (13) vorhanden ist.

18. Vorrichtung gemäß einem der Ansprüche 12 bis 17, dadurch gekennzeichnet, daß die Zuleitung für das gasförmige Ammoniak bzw. die wässrige Ammoniaklösung (5) in der Zuleitung für die mit einem Inertgas verdünnten Kohlensäure (6) als Ringdüse (14) ausgebildet ist.

19. Vorrichtung gemäß Anspruch 18, dadurch gekennzeichnet, daß die Ringdüse (14) als Venturidüse ausgebildet ist.

## Claims

1. A process for the production of suspended alkaline earth metal carbonates by the reaction of water-soluble alkaline earth metal salts with ammonia and carbon dioxide in a bubble column, characterized in that either gaseous ammonia or aqueous ammonia solution are first mixed with the carbon dioxide diluted with an inert gas and then the resulting mixture is directly introduced into the solution of the water-soluble alkaline earth metal salts in the bubble column.

2. The process according to claim 1, characterized in that calcium nitrate is employed as the water-soluble alkaline earth metal salt.

3. The process according to claim 1, characterized in that calcium chlorides and the chlorides and nitrates of magnesium, strontium and barium as well as mixtures thereof are employed as the water-soluble alkaline earth metal salt.

4. The process according to anyone of claims 1 to 3, characterized in that the gaseous ammonia or the aqueous ammonia solution is centrally introduced into a gas stream of the carbon dioxide diluted with an inert gas immediately before entering the bubble column.

5. The process according to anyone of claims 1 to 4, characterized in that the flow velocity of the carbon dioxide diluted with an inert gas at the location of its being mixed with the gaseous ammonia or the aqueous ammonia solution is higher than that of the flow velocity of the gaseous ammonia or the aqueous ammonia solution.

6. The process according to anyone of claims 1 to 5, characterized in that the mixture comprising the gaseous ammonia and the carbon dioxide diluted with an inert gas is introduced vertically from the top to the bottom into the aqueous solution of the alkaline earth metal salt.

7. The process according to anyone of claims 1 to 6, characterized in that the solution of the alkaline earth metal salts is cooled before it enters the bubble column.

8. The process according to anyone of claims 1 to 7, characterized in that the cooling is effected by the evaporation of ammonia.

9. The process according to anyone of claims 1 to 8, characterized in that the bubble column is operated under an elevated pressure.

10. The process according to anyone of claims 1 to 9, characterized in that the mixture comprising suspended alkaline earth metal carbonate and water-soluble alkaline earth metal salts is partially recycled.

11. The process according to anyone of claims 1 to 10, characterized in that the cooled solution of alkaline earth metal salts is supplied to the head of the bubble column as a washing liquid for the effluent gas.

12. An apparatus for carrying out the process according to anyone of claims 1 to 11, consisting of a reactor (1) having an upper supply conduit (2) for the alkaline earth metal salt solution, an upper vent port (3) for the effluent gas, a reaction space (4) capable of being cooled by cooling pipes (8), supply conduits (5) and (6) in the lower portion of the reactor for the gaseous ammonia or ammonia solution, respectively, with the carbon dioxide diluted with an inert gas, the supply pipes (5) for the gaseous ammonia or the aqueous ammonia solution being centrally disposed in the supply pipes (6) for the carbon dioxide diluted with an inert gas, and a bottom outlet (7) for discharging the suspension of the alkaline earth metal carbonate.

13. The apparatus according to claim 12, characterized in that the reaction space (4) has a square shape and the cooling pipes (8) are cross-wise arranged.

14. The apparatus according to claims 12 or 13, characterized in that the upper portion of the reactor (1) is formed to work as a gas-washing unit (9) for the effluent gas.

15. The apparatus according to anyone of claims 12 to 14, characterized in that a recycling conduit (10) and a pump (11) are provided for recirculating the suspension from the bottoms to the top portion of the reactor (1).

16. The apparatus according to claim 15, characterized in that a classifier device (12) for the alkaline earth carbonate has been provided in the recycling conduit (10).

17. The apparatus according to anyone of claims 12 to 16, characterized in that a pressure controller (13) has been provided in the vent conduit for the effluent gas (3).

18. The apparatus according to anyone of claims 12 to 17, characterized in that the supply pipe (5) for the gaseous ammonia or the aqueous ammonia solution has been shaped as an annular nozzle (14) within the supply pipe (6) for the carbon dioxide diluted with an inert gas.

19. The apparatus according to claim 18, characterized in that that the annular nozzle (14) has been designed as a Venturi nozzle.

## Revendications

1. Procédé pour la préparation de carbonates alcalino-terreux en suspension, par transformation de sels alcalino-terreux, solubles dans l'eau, au moyen d'ammoniac et de gaz carbonique dans une colonne à bulles, caractérisé en ce qu'on mélange d'abord soit du gaz ammoniac, soit une solution ammoniacale aqueuse, au gaz carbonique dilué au moyen de gaz inerte, puis on introduit le mélange obtenu directement dans la solution composée des sels alcalino-terreux solubles dans l'eau, placée dans une colonne à bulles.

2. Procédé selon la revendication 1, caractérisé en ce qu'on met en oeuvre, comme sel alcalino-terreux soluble dans l'eau, du nitrate de calcium.

3. Procédé selon la revendication 1, caractérisé en ce qu'on met en oeuvre, comme sel alcalino-terreux soluble dans l'eau, du chlorure de calcium ainsi que des chlorures et nitrates de magnésium, de strontium ou de baryum, ainsi que des mélanges de ceux-ci.

4. Procédé selon l'une des revendications 1 à 3, caractérisé en ce qu'on introduit le gaz ammoniac ou l'ammoniaque, immédiatement avant de l'introduire dans la colonne, dans le centre d'un flux gazeux constitué du gaz carbonique dilué au moyen de gaz inerte.

5. Procédé selon l'une des revendications 1 à 4, caractérisé en ce que la vitesse d'écoulement du gaz carbonique dilué au moyen de gaz inerte est plus grande que la vitesse d'écoulement du gaz ammoniac ou de la solution ammoniacale aqueuse au point de mélange dudit gaz carbonique avec le gaz ammoniac ou avec la solution ammoniacale aqueuse.

6. Procédé selon l'une des revendications 1 à 5, caractérisé en ce que le mélange composé du gaz ammoniac et du gaz carbonique dilué au moyen de gaz inerte est introduit dans la solution aqueuse de sels alcalinoterreux verticalement, de haut en bas.

7. Procédé selon l'une des revendications 1 à 6, caractérisé en ce que la solution de sels alcalino-terreux est refroidie avant d'entrer dans la colonne à bulles.

8. Procédé selon l'une des revendications 1 à 7, caractérisé en ce que le refroidissement s'effectue par évaporation de l'ammoniac.

9. Procédé selon l'une des revendications 1 à 8, caractérisé en ce que l'on fait fonctionner la colonne à bulles en état de surpression.

10. Procédé selon l'une des revendications 1 à 9, caractérisé en ce que le mélange de carbonate alcalinoterreux en suspension et de sels alcalino-terreux solubles dans l'eau circule en partie en circuit fermé.

11. Procédé selon l'une des revendications 1 à 10, caractérisé en ce que la solution refroidie de sels alcalino-terreux est introduite à la tête de la colonne à bulles en tant que liquide de lavage pour le gaz s'échappant.

12. Dispositif pour la mise en oeuvre du procédé selon l'une quelconque des revendications 1 à 11, constitué d'une cuve de réaction (1) comportant une conduite d'amenée supérieure (2) pour la solution de sels alcalino-terreux, une conduite d'évacuation supérieure (3) pour le gaz s'échappant, un espace de réaction (4) pouvant être refroidi au moyen de tuyaux de refroidissement (8), des conduites d'amenée (5) et (6) dans la partie inférieure de l'espace de réaction pour le gaz ammoniac ou la solution ammoniacale aqueuse avec le gaz carbonique dilué au moyen de gaz inerte, les conduites d'amenée (5) de gaz ammoniac ou de la solution ammoniacale aqueuse étant disposées au centre des conduites d'amenée (6) de gaz carbonique dilué au moyen de gaz inerte, ainsi qu'une conduite d'évacuation inférieure (7) pour la suspension contenant le carbonate de sels alcalino-terreux.

13. Dispositif selon la revendication 12, caractérisé en ce que l'espace de réaction (4) a la forme d'un carré et les tuyaux de refroidissement (8) sont disposés en croix.

14. Dispositif selon la revendication 12 ou 13, caractérisé en ce que la partie supérieure de la cuve de réaction (1) est conformée en épurateur de gaz (9) pour le gaz sortant.

15. Dispositif selon l'une des revendications 12 à 14, caractérisé en ce qu'une conduite de remise en circuit (10) et une pompe (11), destinées à la suspension, sont disposées à la base de la partie supérieure de la cuve de réaction (1).

16. Dispositif selon la revendication 15, caractérisé en ce qu'un dispositif de tri (12) du carbonate de sels alcalino-terreux est disposé dans la conduite de remise en circuit (10).

17. Dispositif selon l'une des revendications 12 à 16, caractérisé en ce qu'une commande de pression (13) est disposée dans la conduite d'évacuation (3) du gaz sortant.

18. Dispositif selon l'une des revendications 12 à 17, caractérisé en ce que la conduite d'amenée (5) du gaz ammoniac ou de la solution ammoniacale aqueuse est conformée en tuyère annulaire (14) dans la conduite d'amenée (6) du gaz carbonique dilué avec du gaz inerte.

19. Dispositif selon la revendication 18, caractérisé en ce que la tuyère annulaire (14) est conformée en tuyère de Venturi.

Fig. 1

Fig. 2